# EUROPEAN PATENT APPLICATION

(11) **EP 2 651 151 A1**
(43) Date of publication of application: **16.10.2013**
(21) Application number: 11847071.5
(22) Date of filing: 22.06.2011
(51) Int. Cl.: H04W 4/02, H04W 52/02, H04W 52/28

(54) **POWER SAVING METHOD IN ASSISTED-GLOBAL POSITIONING SYSTEM AND SYSTEM THEREOF**

(30) Priority: 09.12.2010 CN 201010581112
(71) Applicant: ZTE Corporation, Shenzhen, Guangdong 518057 (CN)
(72) Inventor: ZHU, Jianjian, Shenzhen Guangdong 518057 (CN); XIE, Feng, Shenzhen Guangdong 518057 (CN); CHEN, Lin, Shenzhen Guangdong 518057 (CN)
(74) Representative: Jansen, Cornelis Marinus
(86) International application number: PCT/CN2011/076085
(87) International publication number: WO 2012/075802

(57) **Abstract**

The disclosure provides a power saving method and system in an assisted-global satellite positioning system. A positioning service network side computes the working period time length of a satellite positioning system working module according to the moving status of a positioning target terminal; and the positioning target terminal adjusts the working parameter of the satellite positioning system working module according to the working period time length, and controls the satellite positioning system working module and/or a wireless network communication working module to enter a power saving working status. The power saving method and system in the assisted-global satellite positioning system provided by the disclosure, can save the power of the positioning target terminal and reduce the bandwidth resource consumption of the wireless network communication system working module when the assisted-global satellite positioning operation is enabled.

## Description

### TECHNICAL FIELD

The disclosure relates to the technical field of wireless communications, in particular to a power saving method in an assisted-global satellite positioning system and the assisted-global satellite positioning system.

### BACKGROUND

The assisted-global satellite positioning system, such as Assisted-Global Positioning System (A-GPS), is a wireless positioning function implementation scheme excellent in various performance indexes of the positioning service function and system device complexity in various conventional positioning technologies. In general, the assisted-global satellite positioning system consists of a positioning target terminal, a satellite positioning system, a positioning service network side and a positioning information receiving end. During the positioning operation process of the assisted-global satellite positioning system, the positioning target terminal receives an original signal from a positioning satellite on a regular period to compute the pseudo range from a mobile phone to the satellite and transmits the computation result to the positioning service network side. The positioning service network side completes the amending computation to the location of the positioning target terminal based on the information transmitted by the positioning target terminal and the assisted information provided by an assisted positioning device of the positioning service network side, and transmits the computation result as the final location information of the positioning target terminal to the positioning information receiving end.

The operation flow above may conclude that the positioning operation of the assisted-global satellite positioning system can result in enhanced performance of the wireless positioning function but some expenses are required as follows: the positioning target terminal needs to turn a satellite positioning system working module on to receive a signal from the satellite positioning system and further turn a wireless network communication working module on and interact with the positioning service network side for many times. When the positioning target terminal executes positioning operation for a long time periodically, it is necessary to keep the satellite positioning system working module running for a long time to receive a satellite signal and also keep the wireless network communication working module running for a long time to achieve interaction with the positioning service network side, if the two modules both are at working status for a long time, a high power consumption is caused to the positioning target terminal.

### SUMMARY

The main objective of the disclosure is to provide a power saving method and system in an assisted-global satellite positioning system, in order to save the power of a positioning target terminal when the assisted-global satellite positioning operation is enabled.

To achieve the objective above, the technical scheme of the disclosure is implemented as follows.

A power saving method in an assisted-global satellite positioning system includes:
a positioning service network side computes the working period time length of a satellite positioning system working module according to the moving status of a positioning target terminal; and
the positioning target terminal adjusts the working parameter of the satellite positioning system working module according to the working period time length, and controls the satellite positioning system working module and/or a wireless network communication working module to enter a power saving working status.

The process that the positioning service network side computes the working period time length may include:
computing the final location information of the positioning target terminal acquired after correction based on the received original location information, creating and/or updating a historical location information list of the positioning target terminal based on the final location information; and
estimating the moving status of the positioning target terminal according to the historical location information list, and computing the working period time length of the satellite positioning system working module by using a preset dynamic adjustment rule based on an estimation result.

After acquired the working period time length by computing, the method may further include:
by the positioning service network side, judging whether the wireless network communication working module needs to adjust its working status according to at least one of the working period time length of the satellite positioning system working module, the current working status and/or parameter configuration of the wireless network communication working module in the positioning target terminal, and the current service born by the wireless network communication working module, and computing the new working period time and each time window parameter of the wireless network communication working module.

After entered the power saving working status, the method may further include:
proactively allocating bandwidth resources related to the next uplink transmission positioning operation to the wireless network communication working module of the positioning target terminal in advance by the positioning service network side according to the working period time length of the satellite positioning system working module.

Before the positioning service network side computes the working period time length, the method may further include:
after the navigation satellite orbit tracking operation is completed by the satellite positioning system working module of the positioning target terminal, transmitting the original location information to the positioning service network side through the wireless network communication working module of the satellite positioning system working module and transmitting a flag for requesting to enter the power saving working status.

An assisted-global satellite positioning system includes:
a positioning service network side, which is configured to compute the working period time length of a satellite positioning system working module according to the moving status of a positioning target terminal; and
a positioning target terminal, which is configured to adjust the working parameter of the satellite positioning system working module according to the working period time length, and control the satellite positioning system working module and/or a wireless network communication working module to enter a power saving working status.

When computing the working period time length, the positioning service network side may be configured to: compute the final location information of the positioning target terminal acquired after correction based on the received original location information, and create and/or update a historical location information list of the positioning target terminal based on the final location information; and
estimate the moving status of the positioning target terminal according to the historical location information list, and compute the working period time length of the satellite positioning system working module by using a preset dynamic adjustment rule based on an estimation result.

After the working period time length is acquired by computing, the positioning service network side may be further configured to:
judge whether the wireless network communication working module needs to adjust its working status according to at least one of the working period time length of the satellite positioning system working module, the current working status and/or parameter configuration of the wireless network communication working module in the positioning target terminal, and the current service born by the wireless network communication working module, and compute the new working period time and each time window parameter of the wireless network communication working module.

After entered the power saving working status, the positioning service network side may be further configured to:
proactively allocate bandwidth resources related to the next uplink transmission positioning operation to the wireless network communication working module of the positioning target terminal in advance according to the working period time length of the satellite positioning system working module.

Before computes the working period time length, the satellite positioning system working module of the positioning target terminal may be further configured to:
transmit the original location information to the positioning service network side through the wireless network communication working module and transmit a flag for requesting to enter the power saving working status after completing navigation satellite orbit tracking operation.

The power saving method and system in the assisted-global satellite positioning system provided in the disclosure, using the positioning service network side to acquire the working period time length of the satellite positioning system working module in the positioning target terminal such that the positioning target terminal may enter the power saving working status when moving slowly or at an quiescent status, accordingly, the power of the positioning target terminal and/or other carriers can be saved; furthermore, bandwidths can be proactively allocated to the wireless communication network system working module according to the working period time length of the satellite positioning system working module so as to reduce the bandwidth resource consumption of the wireless network communication system working module.

### BRIEF DESCRIPTION OF THE DRAWINGS

Fig. 1 is a diagram showing the structure of an assisted-global satellite positioning system in an embodiment of the disclosure;
Fig. 2 is a diagram showing the structure of a positioning target terminal in Fig. 1;
Fig. 3 is a diagram showing the structure of an assisted-global satellite positioning system in an embodiment of the disclosure;
Fig. 4 is a diagram showing the structure of a positioning target terminal in Fig. 3;
Fig. 5 is a diagram showing the flow of a power saving method in an assisted-global satellite positioning system in an embodiment of the disclosure;
Fig. 6 is a diagram showing the interaction flow between a positioning target terminal and a positioning service network side in Fig. 2;
Fig. 7 is a diagram showing the specific interaction flow between a positioning target terminal and a positioning service network side in Fig. 2;
Fig. 8 is a diagram showing the interaction flow between a positioning target terminal and a positioning service network side in Fig. 4;
Fig. 9 is a diagram showing the specific interaction flow between a positioning target terminal and a positioning service network side in Fig. 4;
Fig. 10 is a diagram showing the workflow of a positioning service network side in Fig. 1;
Fig. 11 is a diagram showing the workflow of a positioning target terminal in Fig. 1;
Fig. 12 is a diagram showing the workflow of a positioning service network side in Fig. 3;
Fig. 13 is a diagram showing the workflow of a positioning target terminal in Fig. 3;
Fig. 14 is a diagram showing the level transformation of a working period time length of a satellite positioning system working module of a positioning target terminal in an embodiment of the disclosure; and
Fig. 15 is a diagram showing the configuration condition of each time window of a working time period of a wireless network communication working module of a positioning target terminal in an embodiment of the disclosure.

### DETAILED DESCRIPTION

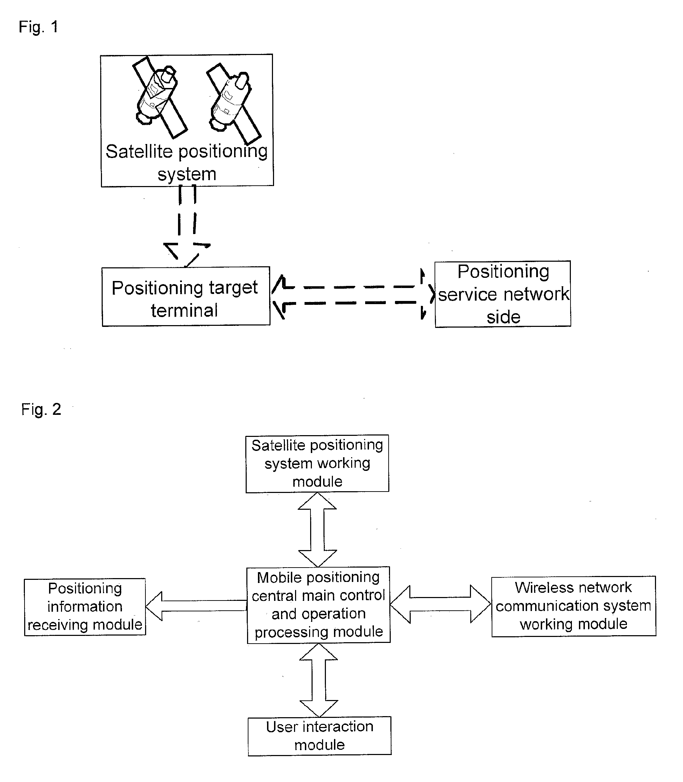

Fig. 1 is a diagram showing the structure of an assisted-global satellite positioning system, consisting of a satellite positioning system, a positioning target terminal and a positioning service network side. The satellite positioning system may be various conventional satellite navigation systems, such as a GPS positioning system, a Galilean satellite navigation system, a GLONASS system and a Beidou navigation system running at present. The positioning target terminal in Fig. 1 can be any mobile terminal integrating the connection function of a wireless communication network (such as various types of cellular networks and wireless local area networks and the like), and the satellite signal receiving function of the satellite positioning system, and the positioning target terminal can be either handheld or vehicle-mounted.

See Fig. 2, which is a diagram showing the structure of a positioning target terminal of the disclosure. The positioning target terminal can be divided into five main functional unit modules with respect to its assisted satellite positioning function. Wherein, a mobile positioning central main control and operation processing module is responsible for the controlling and scheduling and information processing operation task of the whole positioning function, and can interact with the other four modules. A user interaction module mainly accomplishes an initial configuration on related parameters of a positioning function, a positioning function event message reporting and a user control message transmission executing based on the interaction with the mobile positioning central main control and operation processing module. A satellite positioning system working module mainly accomplishes a satellite positioning signal receiving and processes operation on the satellite positioning signal to acquire the original location information of the positioning target terminal based on the interaction with the mobile positioning central main control and operation processing module. A wireless network communication system module accomplishes the connection with the positioning service network side and transmits and receives corresponding positioning operation related messages based on the interaction with the mobile positioning central main control and operation processing module. A positioning information receiving module accomplishes a receiving of the final location information of the positioning target terminal from the mobile positioning central main control and operation processing module based on the interaction with the mobile positioning central main control and operation processing module.

In the assisted-global satellite positioning system, the positioning service network side is a common name of various network element entities of a wireless communication network system side providing an assisted service to a wireless positioning function. To different wireless communication network architectures, different network element entities can bear the function of the positioning service network side, for example, in the Long Term Evolution (LTE) network of the 3rd Generation Partnership Project (3GPP), the function of the positioning service network side is mainly born and accomplished by an eNodeB and an Evolved Serving Mobile Location Center (E-SMLC) together.

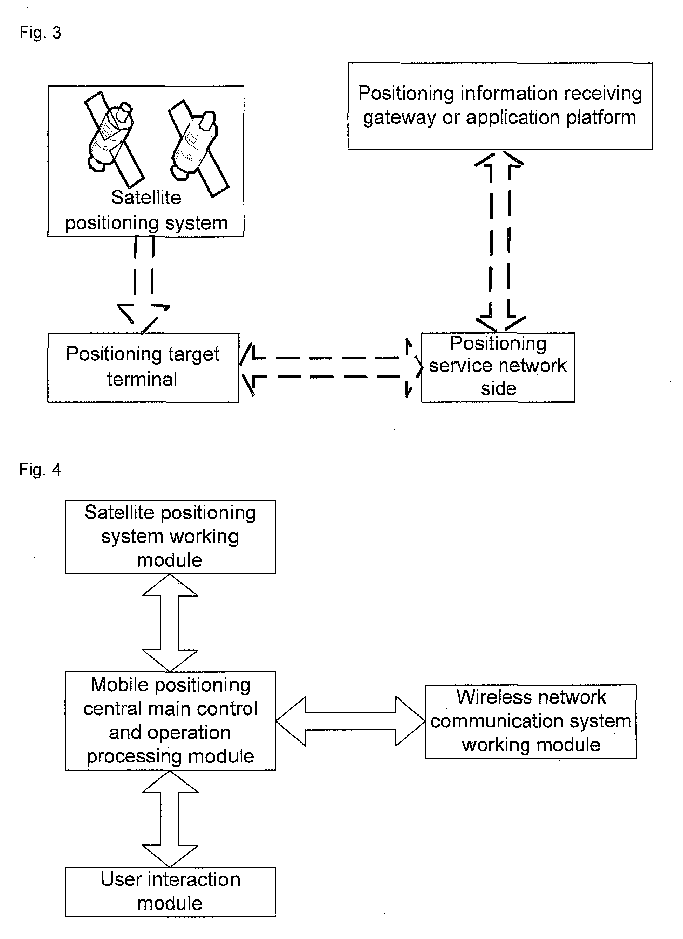

Fig. 3 is a diagram showing the structure of an assisted-global satellite positioning system in another embodiment of the disclosure. With reference to Fig. 3, the assisted-global satellite positioning system consists of a satellite positioning system, a positioning target terminal, a positioning service network side, and a positioning gateway or an application platform receiving positioning information. With respect to the diagram showing the structure of a first kind of assisted-global satellite positioning system, the positioning information receiving end in this kind of assisted-global satellite positioning system structure is not the positioning target terminal itself but a specific positioning information receiving gateway or application platform; furthermore, the positioning target terminal structure in this kind of assisted-global satellite positioning system structure is also different from that in the first one. Fig. 4 is a diagram showing the structure of a positioning target terminal in Fig. 3. As shown in Fig. 4, there is no positioning information receiving module in the positioning target terminal, there is no corresponding final location information receiving process operation neither.

With the development of the wireless communication network system, the positioning function has become a powerful force for the development of a lot of new wireless service applications, the enhancement of the conventional network performance and the provision of a public security service of higher level. The assisted-global satellite positioning is a positioning way to support and enhance the satellite positioning function integrated in a positioning terminal device through a network assisted service provided by the wireless communication network which is connected with the positioning target terminal device. Based on the assisted-global satellite positioning method, various performance indexes of the positioning operation of the positioning target terminal device can be improved, the performance indexes include the time of first connection, positioning precision and response time. However, it can be seen from Fig. 2 and Fig. 4 that the assisted-global satellite positioning operation is completed by the positioning target terminal at the expense of the following two aspects: first, a plurality of modules of the positioning target terminal are required to work simultaneously, which will result in the increase of power consumption of the system, while neither a handheld positioning target terminal device nor a vehicle-mounted one can support overlarge power consumption; furthermore, to complete the assisted-global satellite positioning operation, the positioning target terminal needs to interact with the wireless communication service network side for many times, which will occupy the insufficient wireless network system bandwidth resources. The feature analysis on the assisted-global satellite positioning operation concludes that the effect of the power consumption economization of the positioning target terminal and the wireless network bandwidth resource consumption reduction can be achieved by analyzing the current mobility feature of the positioning target terminal or its carries, setting a proper working time period for the satellite positioning system working module with respect to different mobility, and further configuring a wireless network communication working module to start a corresponding power saving working mechanism.

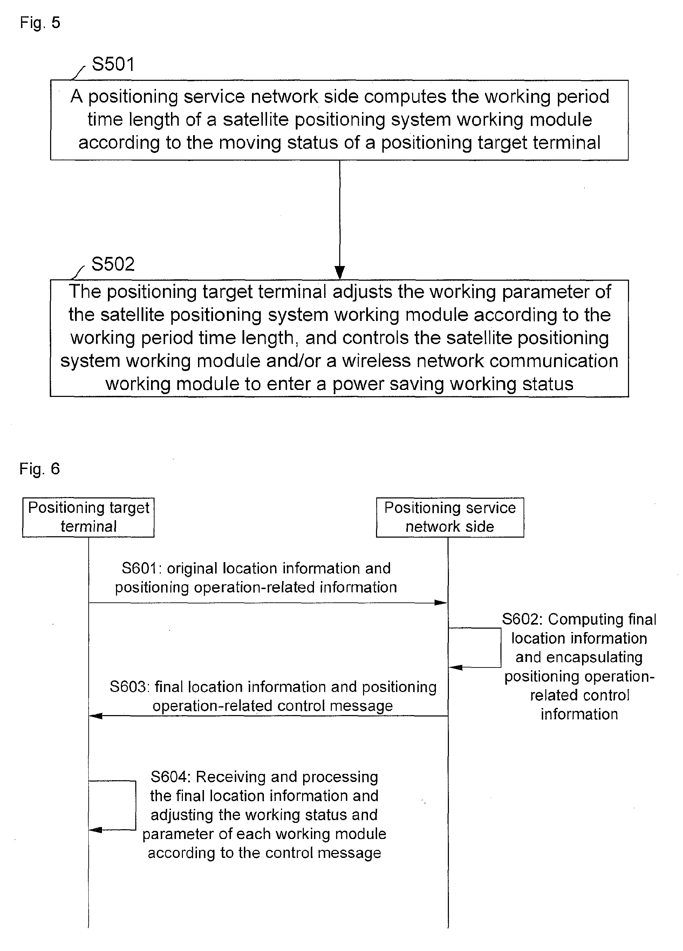

The workflow of the assisted-global satellite positioning system in the disclosure is described below in conjunction with the specific embodiments. See Fig. 5, which is a diagram showing the workflow of an assisted-global satellite positioning system in Fig. 1. The flow includes the following steps:
S501: A positioning service network side computes the working period time length of a satellite positioning system working module according to the moving status of a positioning target terminal, wherein the working period time length of the satellite positioning system working module refers to the length of time for acquiring the original location information once.
S502: The positioning target terminal adjusts the working parameter of the satellite positioning system working module according to the working period time length, and controls the satellite positioning system working module and/or a wireless network communication working module to enter a power saving working status. For example, if the time for acquiring the original location information once by the satellite positioning system working module is relatively long, the working parameter can be adjusted so as to make the satellite positioning system working module enter a power saving status of a corresponding level within this period of time to achieve the purpose of saving power.

With reference to Fig. 6, the method flow in Fig. 5 can specifically include:
S601: A positioning target terminal transmits an original location information and positioning operation-related information to a positioning service network side so as to interact with the positioning service network side and complete the estimation to mobile status.
S602: The positioning service network side completes the final location correcting and computing of the positioning target terminal and positioning operation control message encapsulating.
S603: The positioning service network side downlink transmits the encapsulated final location information and the positioning operation control message to the positioning target terminal.
S604: The positioning target terminal receives and processes the final location information and adjusts the working status and corresponding parameters of respective working modules of the positioning target terminal based on a received downlink control message.

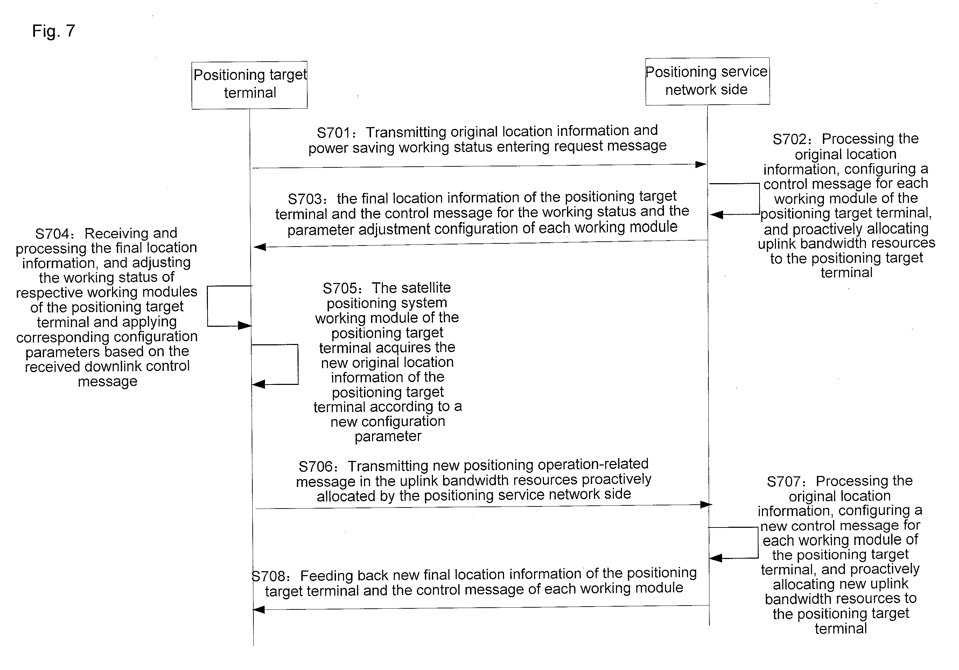

See Fig. 7, which is a diagram showing the detailed flow of interaction between the positioning target terminal and the positioning service network side in the assisted-global satellite positioning system in Fig. 1. The flow can specifically include the following steps:
S701: The positioning target terminal transmits the original location information and a power saving working status entering request message to the positioning service network side using the wireless network communication working module of the positioning target terminal.
S702: The positioning service network side processes the original location information, configures a control message for each working module of the positioning target terminal and proactively allocates uplink bandwidth resources to the positioning target terminal.
S703: The positioning service network side downlink transmits the final location information and the control message for the working status and the parameter adjustment configuration of each working module of the positioning target terminal.
S704: The positioning target terminal controls its positioning information receiving module to receive and process the final location information, and adjusts the working status of its respective working modules and applies the corresponding configuration parameters based on the received downlink control message.
S705: The satellite positioning system working module of the positioning target terminal acquires the new original location information of the positioning target terminal according to the newly configured working parameter.
S706: The wireless network communication working module of the positioning target terminal transmits a new power saving working status request and/or the newly acquired original location information in the uplink bandwidth resources proactively allocated by the positioning service network side.
S707: The positioning service network side processes the received original location information of the positioning target terminal, configures a new control message for the positioning target terminal, and proactively re-allocates bandwidth resources of the related information of the next uplink transmission positioning operation to the positioning target terminal.
S708: The positioning service network side downlink transmits a new final location information and a new control message for the status and the parameter adjustment configuration of each working module to the positioning target terminal.

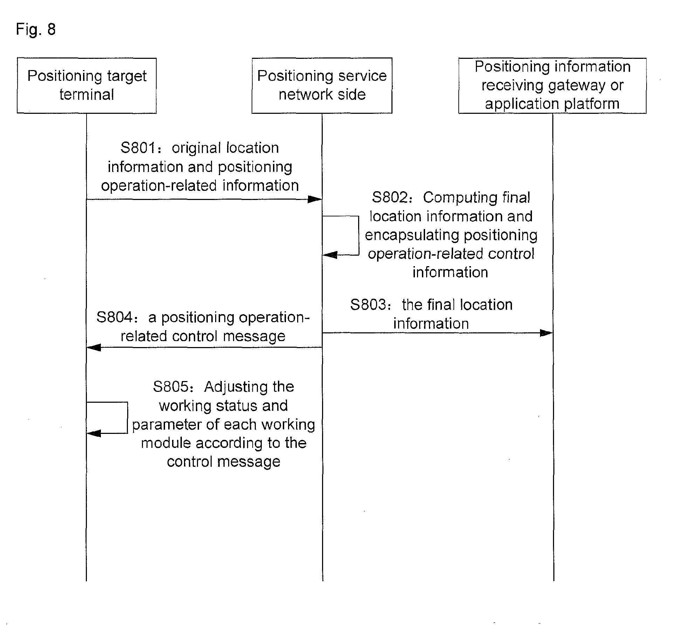

Fig. 8 is a diagram showing the workflow of the assisted-global satellite positioning system as described in the embodiment in Fig. 3. As shown in Fig. 8, the flow can include the following steps:
S801: The positioning target terminal transmits the original location information and positioning operation-related information to the positioning service network side so as to interact with the positioning service network side and complete the estimation of mobile status.
S802: The positioning service network side completes the final location correcting and computing of the positioning target terminal and positioning operation control message encapsulating.
S803: The positioning service network side transmits a final location message to a positioning information receiving gateway or an application platform.
S804: The positioning service network side downlink transmits the encapsulated positioning operation control message.
S805: The positioning target terminal adjusts the working status and the corresponding parameters of its respective working modules based on the received downlink control message.

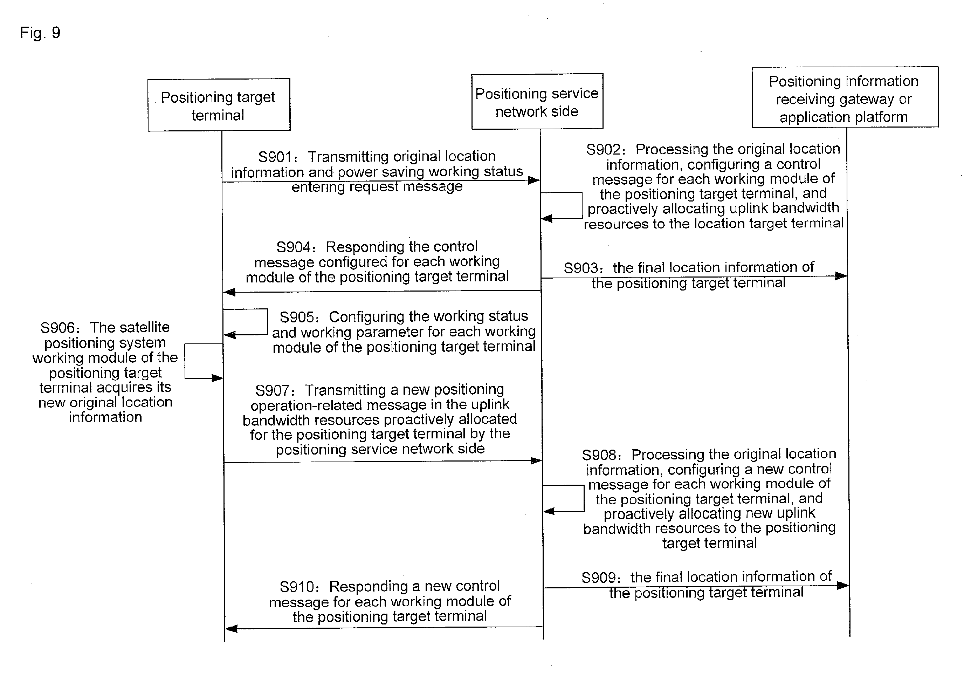

Fig. 9 is a diagram showing the detailed workflow of the assisted-global satellite positioning system as illustrated in Fig. 3. The flow can specifically include the following steps:
S901: The positioning target terminal transmits the original location information and a power saving working status entering request message to the positioning service network side using the wireless network communication working module of the positioning target terminal.
S902: A network element bearing positioning function at the positioning service network side initially processes correction computation to the received original location information to acquire a final location information, subsequently, configures a control message for the working status and the parameter adjustment configuration of each working module of the positioning target terminal based on a predetermined processing judgment mechanism and/or control instruction, and proactively allocates uplink bandwidth resources of the related information of the next uplink transmission positioning operation to the positioning target terminal.
S903: The positioning service network side transmits the final location message to a positioning information receiving gateway or an application platform.
S904: The positioning service network side downlink transmits the control message for the working status and the parameter adjustment configuration of each working module of the positioning target terminal.
S905: The positioning target terminal adjusts the working status of each working module and applies the corresponding configuration parameters based on the received downlink control message.
S906: The satellite positioning system working module of the positioning target terminal completes the operation once for acquiring the original location information of the positioning target terminal according to the newly configured working parameter.
S907: The wireless network communication working module of the positioning target terminal transmits a new power saving working status request and/or the newly acquired original location information in the uplink bandwidth resources proactively allocated in advance by the positioning service network side.
S908: The positioning service network side processes the received original location information of the positioning target terminal, configures a new control message to the positioning target terminal, and proactively re-allocates bandwidth resources of the related information of the next uplink transmission positioning operation to the positioning target terminal.
S909: The positioning service network side transmits the new final location message of the positioning target terminal to a positioning information receiving gateway or an application platform.
S910: The positioning service network side downlink transmits a control message for new status and parameter adjustment configuration of each working module to the positioning target terminal.

The working process of the assisted-global positioning system as described above is described below in conjunction with the specific embodiments in detail.

Based on the assisted-global positioning system as shown in Fig. 1, a first specific embodiment is provided. In the embodiment, it is assumed that the positioning target terminal enables a positioning navigation function based on the mobile positioning central main control and operation processing module in response to the requirement of a user and/or a system, thus the satellite positioning system working module is turned on. The satellite positioning system working module of the positioning target terminal needs to acquire assisted information required in the synchronization with a satellite track based on the wireless network communication working module before acquiring a positioning satellite signal, and complete synchronization operation with a positioning satellite based on the assisted information. After the positioning target terminal acquires the original location information of the positioning target terminal using the satellite positioning system working module, the following operation is required to be completed:
1): the positioning target terminal judges whether to transmit a power saving working status entering request to the positioning service network side based on a user interaction module and/or some predetermined trigger mechanisms; and
2): based on the judgment result of 1), a power saving working status entering request message of positioning function-related modules and/or the original location information of the positioning target terminal is uplink transmitted to the positioning service network side.

Based on the received uplink transmission message of the positioning target terminal, the positioning service network side completes the following operation:
1): initially, completes the correction computation to the location of the positioning target terminal based on the original location information and the assisted information provided by the assisted positioning device of the positioning service network side, in order to acquire the final location information of the positioning target terminal;
2): a historical location information list of the positioning target terminal is created based on the final location information of the positioning target terminal;
3): the power saving working status enabling flag corresponding to each positioning target terminal created by the positioning service network side is set based on the power saving working status entering request of the positioning target terminal, the current working status and the born service feature of the wireless network communication working module of the positioning target terminal, the processing judgment mechanism and/or the control instruction of the positioning service network side; and
4): with only single data in the historical location information list of the positioning target terminal now, the positioning service network side does not adjust the working parameter of each module of the positioning target terminal nor adjust the working status and corresponding parameters of each working module of the positioning target terminal temporarily, but only downlink transmits the final location information of the positioning target terminal to the positioning target terminal through the wireless network communication working module of the positioning target terminal.

After the positioning target terminal receives the downlink transmitted final location information based on the wireless network communication working module of the positioning target terminal, the final location information is transmitted to the positioning information receiving module through the mobile positioning central main control and operation processing module.

It should be noted that the positioning target terminal can uplink transmit the power saving working status entering request message of a positioning function-related module and the original location information of the positioning target terminal to the positioning service network side either separately or by a piggyback mechanism in each embodiment of the disclosure.

Based on the structure of the assisted-global satellite positioning system in Fig. 3, a second specific embodiment of the disclosure is provided. In the specific embodiment, it is assumed that the positioning target terminal enables a positioning navigation function based on the mobile positioning central main control and operation processing module in response to the requirement of a user and/or a system. With similar operation as that in the first specific embodiment, the positioning target terminal completes the original location information acquiring and corresponding judging operation, and uplink transmits the power saving working status entering request message of the positioning function-related module and/or the original location information of the positioning target terminal to the positioning service network side.

In comparison with the first specific embodiment above, the main difference lies in that the positioning service network side transmits the final location information of the positioning target terminal to the positioning information receiving gateway or application platform based on the received uplink transmitted message of the positioning target terminal. Correspondingly, in the embodiment, the positioning target terminal does not process receive processing operation to the final location information.

Based on the structure of the assisted-global satellite positioning system in Fig. 1, a third specific embodiment of the disclosure is provided. In the specific embodiment, it is assumed that the positioning target terminal currently acquired the original location information of the N^{th} (the N is greater than or equal to 2) time, the operation of the positioning target terminal is as follows:
1): the positioning target terminal judges whether to transmit a power saving working status entering request to the positioning service network side based on a user interaction module and/or some predetermined trigger mechanisms; and
2): based on the judgment result of 1), the power saving working status entering request message of the positioning function-related module of the positioning target terminal and/or the original location information of the positioning target terminal is transmitted to the positioning service network side through a wireless network communication working module.

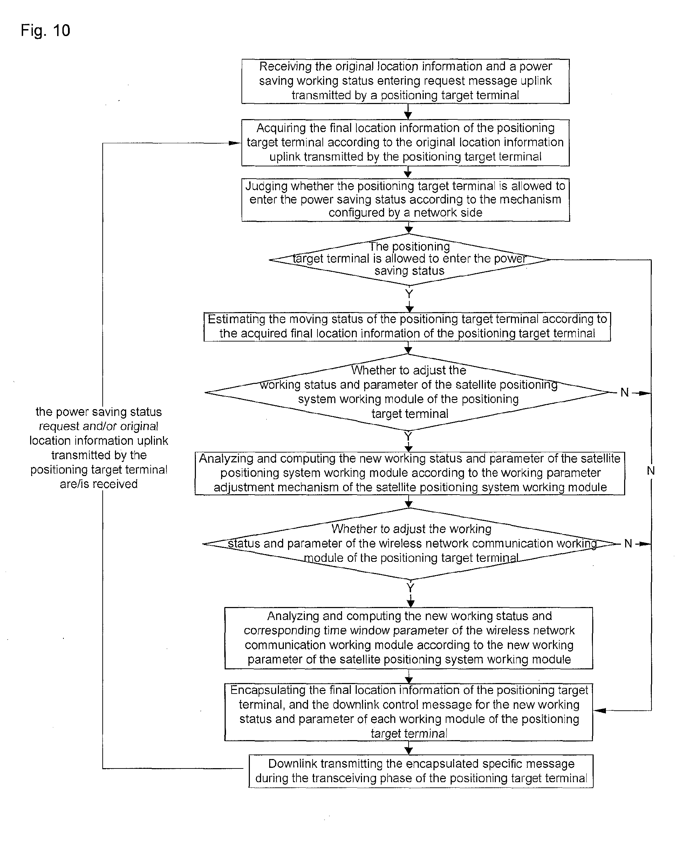

Based on the received uplink transmitted message of the positioning target terminal, the positioning service network side completes the following operation:
1): initially, completes the correction computation to the location of the positioning target terminal based on the original location information and the assisted information provided by the assisted positioning device of the positioning service network side, in order to acquire the final location information of the positioning target terminal;
2): the positioning service network side updates the historical location information list of the positioning target terminal based on the final location information of the positioning target terminal;
3): the power saving working status enabling flag corresponding to each positioning target terminal of the positioning service network side is set based on the power saving working status entering request of the positioning target terminal, the current working status and the born service feature of the wireless network communication working module of the positioning target terminal, the processing judgment mechanism and/or the control instruction of the positioning service network side; and
4): if the power saving working status enabling flag corresponding to the positioning target terminal is enabling and there are data for N (N is greater than or equal to 2) times in the historical location information list of the positioning target terminal currently, then the positioning service network side can execute corresponding operation according to the operation flow in Fig. 10.

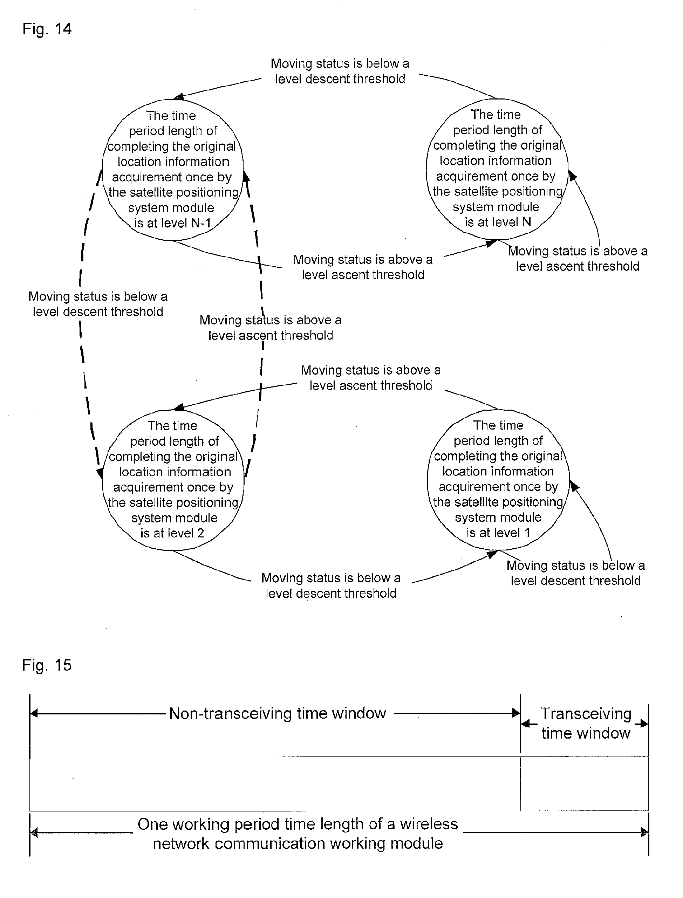

The operation flow in Fig. 10 is illustrated specifically as follows: initially, the moving status of the positioning target terminal is estimated according to the acquired location information of the positioning target terminal, and the satellite positioning system working module is adjusted to acquire the time window length of the original location information once, namely, a working time period, by a predetermined dynamic adjustment rule based on the estimation result. The adjustment mechanism for the working period time length of the satellite positioning system working module can adopt but is not limited to the method in Fig. 14.

The adjustment method in Fig. 14 is described as follows:
at first, some parameters are initially set based on the interaction between the positioning service network side and the positioning target terminal, mainly including the following items: working period time length level (the relationship of the time lengths represented by respective levels is increasing from small to large and can be but not limited to the increasing manner of double increasing) of N (N is greater than or equal to 2) satellite positioning system working modules, and the level ascent threshold and level descent threshold of the working period time length of the satellite positioning system working module. The working period time length of initially entering the power saving status of the satellite positioning system working module is at level 1, and the maximum working period time length of entering the power saving status of the satellite positioning system working module is at level N.

When processing level adjustment to the working period time length of the satellite positioning system working module, the following three cases can be provided:
1): The next working period time length of the satellite positioning system working module still maintains at level 1 if the positioning service network side determines that the moving status of the positioning target terminal is below the level descent threshold when the current working period time length of the satellite positioning system working module is at level 1; and the next working period time length of the satellite positioning system working module is adjusted to level 2 if the positioning service network side determines that the moving status of the positioning target terminal is above the level ascent threshold when the current working period time length of the satellite positioning system working module is at level 1.
2): The next working period time length of the satellite positioning system working module is adjusted to level k-1 if the positioning service network side determines that the moving status of the positioning target terminal is below the level descent threshold when the current working period time length of the satellite positioning system working module is at level k (1<k<N); and the next working period time length of the satellite positioning system working module is adjusted to level k+1 if the positioning service network side determines that the moving status of the positioning target terminal is above the level ascent threshold when the current working period time length of the satellite positioning system working module is at level k.
3): The next working period time length of the satellite positioning system working module is adjusted to level N-1 if the positioning service network side determines that the moving status of the positioning target terminal is below the level descent threshold when the current working period time length of the satellite positioning system working module is at level N; the next working period time length of the satellite positioning system working module still maintains at level N if the positioning service network side determines that the moving status of the positioning target terminal is above the level ascent threshold when the current working period time length is at level N; and the working status adjustment flag is set to "adjusted" if the working period time length level of the satellite positioning system working module needs to be adjusted, otherwise, the working status adjustment flag is set to "not adjusted".

After the next working period time length of the satellite positioning system working module of the positioning target terminal is acquired through the dynamic adjustment mechanism above, a working status and corresponding working parameter are configured based on the service feature currently born by the wireless network communication working module. If the positioning service network side finds that the wireless network communication working module of the positioning target terminal is at a continuous transceiving status currently and bears no service applications except for the assisted positioning service, it is necessary to control the wireless network communication working module of the positioning target terminal to enter a discontinuous transceiving power saving working status and configure the time length and two time windows' configuration condition of a working period of the wireless network communication working module of the positioning target terminal in the discontinuous transceiving working status based on the working time period of the satellite positioning system working module and the definition and description of the power saving working mechanism in the wireless network communication protocol standard used by the assisted-global satellite positioning system. At the same time, the working status adjustment flag of the wireless network communication working module of the positioning target terminal is set to "not adjusted". The configuration condition of a working time period of the wireless network communication working module of the positioning target terminal at the discontinuous transceiving working status is as shown in Fig. 15, a working time period consists of a non-transceiving time window and a transceiving time window.

After the adjustment analysis computation operation is completed, the positioning service network side downlink transmits three kinds of messages to the positioning target terminal:
1): the final location information of the positioning target terminal is downlink transmitted to the positioning target terminal through the wireless network communication working module of the positioning target terminal;
2): the control message controls the wireless network communication working module of the positioning target terminal to enter the discontinuous transceiving working status based on the definition and description of the wireless network communication protocol standard used by the assisted-global satellite positioning system of the disclosure; and
3): encapsulates the specific control message serving the positioning function operation according to the judgment operation and adjustment analysis computation result above.

The specific control message includes but is not limited to the following four fields: the working status adjustment flag of the satellite positioning system working module of the positioning target terminal, the working status adjustment flag of the wireless network communication working module of the positioning target terminal, the level (if the positioning target terminal and the positioning service network side have reached an agreement on the time length corresponding to each level of the satellite positioning system working module) of the satellite positioning system working module of the positioning target terminal or a working period time length, and the level (if the positioning target terminal and the positioning service network side have reached an agreement on the time length corresponding to each level of the wireless network communication working module) of the wireless network communication working module of the positioning target terminal or a working period time length. The value of the first two flag fields of the specific control message can be used for determining whether to fill the last two fields.

The processing operation to the three kinds of downlink messages by the positioning target terminal is as follows:
1): the mobile positioning central main control and operation processing module transmits the final location information of the positioning target terminal to the positioning information receiving module;
2): the wireless network communication working module is controlled to enter the discontinuous transceiving power saving working status based on the definition and description of the wireless network communication protocol standard used by the assisted-global satellite positioning system of the disclosure, and corresponding time parameter configuration is applied; and
3): the received specific downlink control message serving the positioning function operation is processed.

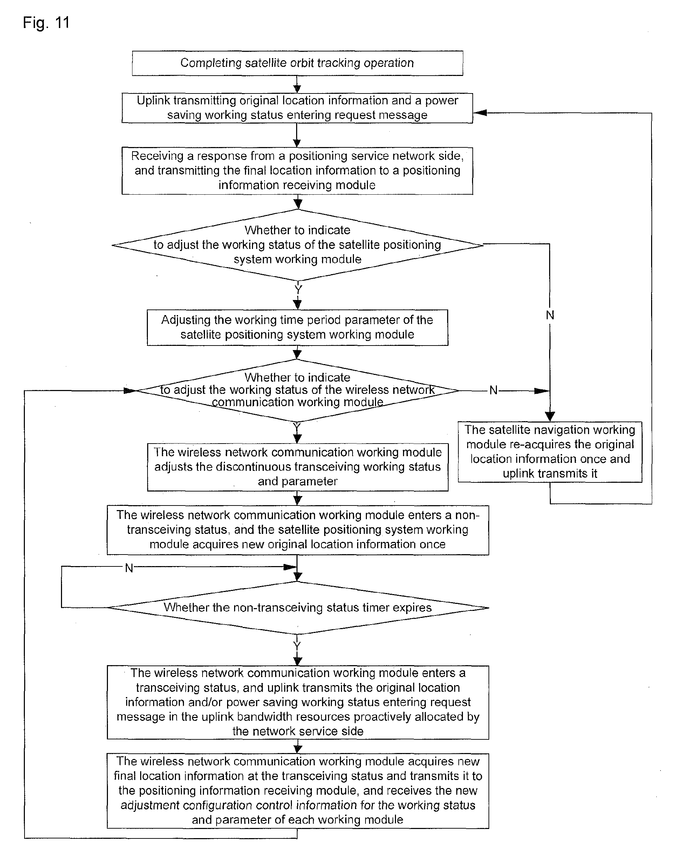

Fig. 11 shows the process of processing the received specific downlink control message serving the positioning function operation by the positioning target terminal in the embodiment above. With reference to Fig. 11, if the working status adjustment flags of both the satellite positioning system working module and the wireless network communication working module of the positioning target terminal indicate "not adjusted", then the positioning target terminal does not adjust the working status and parameters of each working module configured currently; if the working status adjustment flag of the satellite positioning system working module of the positioning target terminal indicates "adjusted" but the working status adjustment flag of the wireless network communication working module of the positioning target terminal indicates "not adjusted", then the positioning target terminal configures the working time period of the satellite positioning system working module based on the working period time length or level of the satellite positioning system working module of the positioning target terminal included in the transmitted specific message.

The positioning target terminal, based on the definition and description of the wireless network communication protocol standard used in the assisted-global satellite positioning system of the disclosure, controls the wireless network communication working module to enter a non-transceiving time window according to the received downlink control message, and starts a timer according to the time parameter in the downlink transmission message; at the same time, the satellite positioning system working module acquires new original location information once at the window. Based on the control mechanism of the timer, the positioning target terminal controls the wireless network communication working module to terminate the non-transceiving working status and enter a transceiving time window, in the transceiving time window, the positioning target terminal controls the wireless network communication working module to execute the uplink transmitting operation, as initially described in the example, on the uplink bandwidth resources allocated in advance by the positioning service network side.

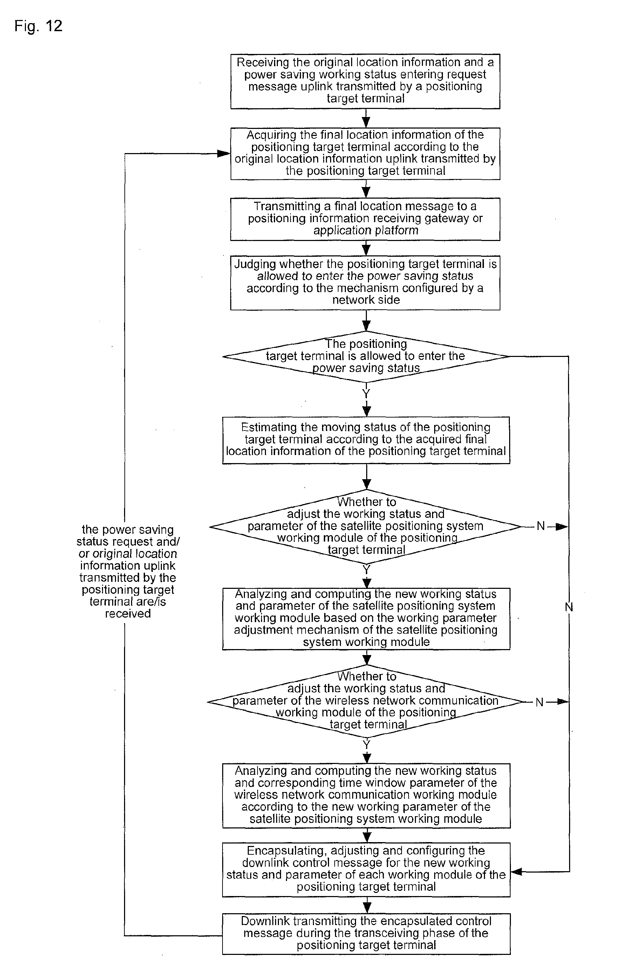

Based on the structure of the assisted-global satellite positioning system in Fig. 3, a fourth specific embodiment of the disclosure is provided. Comparing with the operation flow in Fig. 12 and Fig. 10, the embodiment has the difference as follows:

After the positioning service network side acquires the final location information of the positioning target terminal based on the original location information uplink transmitted by the positioning target terminal, the final location information is transmitted to a positioning information receiving gateway or an application platform.

After the positioning service network side completes the adjusting and configuring operation to the positioning target terminal, the messages to be downlink transmitted to the positioning target terminal change from three kinds to two kinds: 1) the control message controls the wireless network communication working module of the positioning target terminal to enter the discontinuous transceiving working status based on the definition and description of the wireless network communication protocol standard used in the assisted-global satellite positioning system of the disclosure; 2) the specific control message serving the positioning function operation is encapsulated according to the judgment operation and adjustment analysis computation result.

The processing operation to the two kinds of downlink messages by the positioning target terminal is as follows: 1) the wireless network communication working module is controlled to enter the discontinuous transceiving power saving working status based on the definition and description of the wireless network communication protocol standard used in the assisted-global satellite positioning system of the disclosure, and the corresponding time parameter configuration is applied; 2) the received specific downlink control message serving the positioning function operation is processed.

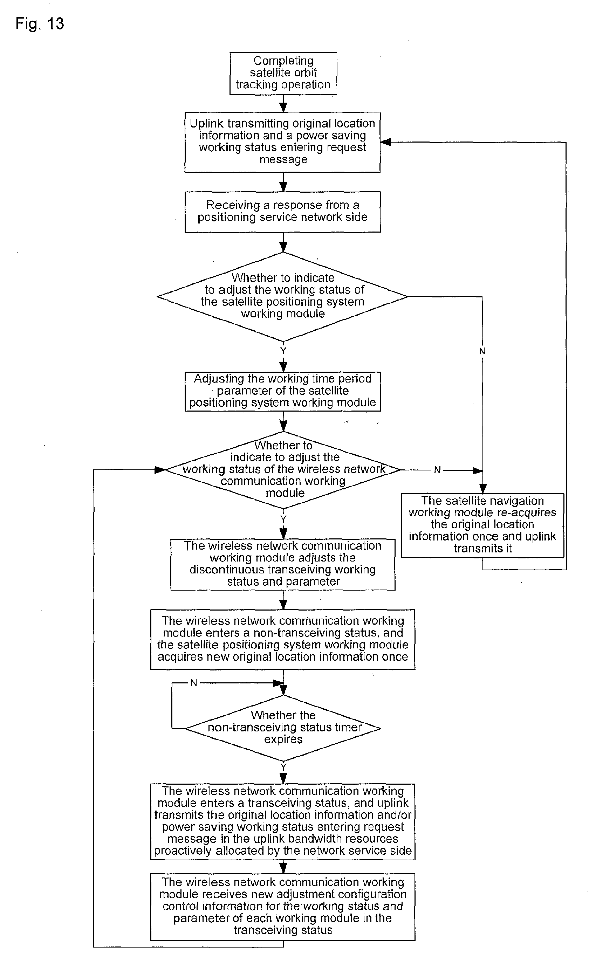

With reference to Fig. 13, the processing manner to the received specific downlink control message serving the positioning function operation by the positioning target terminal is as follows: if the working status adjustment flags of both the satellite positioning system working module and the wireless network communication working module of the positioning target terminal indicate "not adjusted", then the positioning target terminal does not adjust the working parameter of each working module configured currently; if the working status adjustment flag of the satellite positioning system working module of the positioning target terminal indicates "adjusted" but the working status adjustment flag of the wireless network communication working module of the positioning target terminal indicates "not adjusted", then the positioning target terminal configures the working time period of the satellite positioning system working module based on the working period time length or level of the satellite positioning system working module of the positioning target terminal included in the transmitted specific message. Other operation are the same as that in the third specific embodiment above.

Based on the structure of the assisted-global satellite positioning system in Fig. 1, a fifth specific embodiment of the disclosure is provided. As described in the third specific embodiment above, after the assisted-global satellite positioning system completes the operation above and the positioning service network side completes configuration operation to the next working period time length of the satellite positioning system working module of the positioning target terminal based on the dynamic adjustment mechanism, the working status and corresponding working parameter are configured based on the service feature currently born by the wireless network communication working module of the positioning target terminal. The difference between the fifth specific embodiment and the third specific embodiment lies in: if the positioning service network side finds that the wireless network communication working module of the positioning target terminal is at the discontinuous transceiving status currently and the current working period time length of the wireless network communication working module is the same as the configured next working period time length of the satellite positioning system working module, then the working parameter adjustment flag of the wireless network communication working module of the positioning target terminal is set to "not adjusted".

Based on the structure of the assisted-global satellite positioning system in Fig. 3, a sixth specific embodiment of the disclosure is provided. As described in the fourth embodiment above, after the assisted-global satellite positioning system completes the operation above and the positioning service network side completes configuration operation to the next working period time length of the satellite positioning system working module of the positioning target terminal based on the dynamic adjustment mechanism, the working status and corresponding working parameter are configured based on the service feature currently born by the wireless network communication working module of the positioning target terminal. The difference between the sixth specific embodiment and the fourth specific embodiment lies in: if the positioning service network side finds that the wireless network communication working module of the positioning target terminal is at the discontinuous transceiving status currently and the current working period time length of the wireless network communication working module is the same as the configured next working period time length of the satellite positioning system working module, then the working parameter adjustment flag of the wireless network communication working module of the positioning target terminal is set to "not adjusted".

Based on the structure of the assisted-global satellite positioning system in Fig. 1, a seventh specific embodiment of the disclosure is provided. As described in the third and fifth specific embodiments above, after the assisted-global satellite positioning system completes all the operation above and the positioning service network side acquires the next working period time length of the satellite positioning system working module of the positioning target terminal based on the dynamic adjustment mechanism, the positioning service network side configures the working status and corresponding working parameter based on the service feature currently born by the wireless network communication working module of the positioning target terminal. The difference between the seventh specific embodiment and the third and fifth specific embodiments lies in: if the positioning service network side finds that the wireless network communication working module of the positioning target terminal is at the discontinuous transceiving status currently and the current working period time length of the wireless network communication working module is different from the configured next working period time length of the satellite positioning system working module, the following operation is executed:
1): Letting the current working period time length of the satellite positioning system working module of the positioning target terminal be *T_{SNS},* the configured next working period time length of the satellite positioning system working module of the positioning target terminal is *T_{N_SNS},* and *T_{N_SNS}* is not equal to *T_{SNS}*; letting the current working period time length of the wireless network communication working module be *T_{WNS}*, and the next working period time length, to be configured, of the wireless network communication working module of the positioning target terminal is *T_{N_WNCS}.*
   If *T_{N_SNS} > T_{WNCS}* , processing operation according to the following steps:
   Step i: *T_{N_SNS}* is expressed as *T_{N_SNS} = n*T_{WNCS}* + *t* (wherein the n is an integer greater than 0, 0*<t<T_{WNCS}*) firstly;
   Step ii: based on the expression in Step i, if *t*<*T_{WNCS}*/2, then letting *T_{N_SNS}* = *n***T_{WNCS}*, and Step iv is executed, otherwise, Step iii is executed;
   Step iii: based on the expression in Step i, if *t* >= *T_{WNCS}*/2 , then letting *T_{N_SNS}* = (*n*+1)**T_{WNCS}*. and
   Step iv: the working parameter adjustment flag of the satellite positioning system working module of the positioning target terminal is set to "adjusted", the discontinuous transceiving working status adjustment flag of the wireless network communication working module of the positioning target terminal is set to "not adjusted", and the working period time length of the satellite positioning system working module of the positioning target terminal is configured to be *T_{N_SNS}*.
   If *T_{N_SNS}* < *T_{WNCS}*, executing the following operation:
   Step i: letting *T_{N_WNCS} = T_{N_SNS}* firstly; and
   Step ii: the working parameter adjustment flag of the satellite positioning system working module of the positioning target terminal is set to "adjusted", the working status adjustment flag of the wireless network communication working module of the positioning target terminal is set to "adjusted", the next working period time length of the satellite positioning system working module of the positioning target terminal is configured to be *T_{N_SNS}*, and the working period time length of the wireless network communication working module of the positioning target terminal is configured to be *T_{N_WNCS}.*
2): Letting the current working period time length of the satellite positioning system working module of the positioning target terminal be *T_{SNS},* now the configured next working period time length of the satellite positioning system working module of the positioning target terminal is *T_{N_SNS},* and *T_{N_SNS}* is equal to *T_{SNS};* letting the current working period time length of the wireless network communication working module be *T_{WNCS}*, and the next working period time length, to be configured, of the wireless network communication working module of the positioning target terminal is *T_{N_SNS}*.
   If *T_{N_SNS}*>*T_{WNCS}*, processing operation according to the following steps:
   Step i: *T_{N_SNS}* is expressed as *T_{N_SNS}* = *n* * *T_{WNCS}* + *t* (wherein the n is an integer greater than 0, 0 < *t* < *T_{WNCS}*) firstly;
   Step ii: based on the expression in Step i, if *t*<*T_{WNCS}*/2 , then letting *T_{N_SNS}* = *n***T_{WNCS}*, and Step iv is executed, otherwise, Step iii is executed;
   Step iii: based on the expression in Step i, if *t* >= *T_{WNCS}*/2 , then letting *T_{N_SNS}* = (*n*+1)**T_{WNCS}*; and
   Step iv: the working parameter adjustment flag of the satellite positioning system working module of the positioning target terminal is set to "adjusted", the discontinuous transceiving working status adjustment flag of the wireless network communication working module of the positioning target terminal is set to "not adjusted", and the working period time length of the satellite positioning system working module of the positioning target terminal is configured to be *T_{N_SNS}.*
   If *T_{N_SNS}* < *T_{WNCS}*, executing the following operation:
   Step i: letting *T_{N_WNCS}* = *T_{N_SNS}* firstly; and
   Step ii: the working parameter adjustment flag of the satellite positioning system working module of the positioning target terminal is set to "not adjusted", the working status adjustment flag of the wireless network communication working module of the positioning target terminal is set to "adjusted", and the working period time length of the wireless network communication working module of the positioning target terminal is configured to be *T_{N_WNCS}*.
   After the operation above is completed, continue to complete the encapsulating operation to the specific downlink control message serving the positioning function operation as described in the fifth specific embodiment. In the specific embodiment, the operation of receiving the specific downlink control message by the positioning target terminal is as shown in the flow operation in Fig. 11.

If the parameter adjustment flag of the satellite positioning system working module of the positioning target terminal indicates "adjusted" but the working status adjustment flag of the wireless network communication working module of the positioning target terminal indicates "not adjusted", then the positioning target terminal configures the working period time length of the satellite positioning system working module based on the working period time length of the satellite positioning system working module in the received specific downlink control message.

If both the parameter adjustment flag of the satellite positioning system working module and the working status adjustment flag of the wireless network communication working module of the positioning target terminal indicate "adjusted", then the positioning target terminal configures the working period time length of the satellite positioning system working module based on the working period time length of the satellite positioning system working module in the received specific downlink control message; and further configures the working period time length of the wireless network communication working module based on the working period time length of the wireless network communication working module in the received specific downlink control message, and further configures the transceiving window length and non-transceiving window length after the wireless network communication working, module of the positioning target terminal enters the power saving working status based on the power saving working mechanism defined and described by the wireless network communication protocol standard used in the assisted-global satellite positioning system of the disclosure.

If the parameter adjustment flag of the satellite positioning system working module of the positioning target terminal indicates "not adjusted" but the working status adjustment flag of the wireless network communication working module of the positioning target terminal indicates "adjusted", then the positioning target terminal configures the working period time length of the wireless network communication working module based on the working period time length of the wireless network communication working module in the received specific downlink control message, and further configures the transceiving window length and non-transceiving window length after the wireless network communication working module of the positioning target terminal enters the power saving working status based on the power saving working mechanism defined and described by the wireless network communication protocol standard used in the assisted-global satellite positioning system of the disclosure.

Based on the structure of the assisted-global satellite positioning system in Fig. 3, an eighth specific embodiment of the disclosure is provided. As described in the fourth and sixth specific embodiments above, after the assisted-global satellite positioning system completes all the operation above and the positioning service network side acquires the next working period time length of the satellite positioning system working module of the positioning target terminal based on the dynamic adjustment mechanism, the positioning service network side configures the working status and corresponding working parameter based on the service feature currently born by the wireless network communication working module of the positioning target terminal. The difference between the eighth specific embodiment and the fourth and sixth specific embodiments lies in: if the positioning service network side finds that the wireless network communication working module of the positioning target terminal is at the discontinuous transceiving status currently and the current working period time length of the wireless network communication working module is different from the next working period time length of the satellite positioning system working module, then the configuration operation of the respective working period time lengths of two working modules as described in the seventh specific embodiment is executed.

After the operation above is completed, continue to complete the encapsulating operation to the specific downlink control message serving the positioning function operation as described in the sixth specific embodiment. The operation of receiving the specific downlink control message by the positioning target terminal is as shown in the flow operation in Fig. 13.

If the parameter adjustment flag of the satellite positioning system working module of the positioning target terminal indicates "adjusted" but the working status adjustment flag of the wireless network communication working module of the positioning target terminal indicates "not adjusted", then the positioning target terminal configures the working period time length of the satellite positioning system working module based on the working period time length of the satellite positioning system working module in the received specific downlink control message.

If both the parameter adjustment flag of the satellite positioning system working module and the working status adjustment flag of the wireless network communication working module of the positioning target terminal indicate "adjusted", then the positioning target terminal configures the working period time length of the satellite positioning system working module based on the working period time length of the satellite positioning system working module in the received specific downlink control message; and further configures the working period time length of the wireless network communication working module based on the working period time length of the wireless network communication working module in the received specific downlink control message, and further configures the transceiving window length and non-transceiving window length after the wireless network communication working module of the positioning target terminal enters the power saving working status based on the power saving working mechanism defined and described by the wireless network communication protocol standard used in the assisted-global satellite positioning system of the disclosure.

If the parameter adjustment flag of the satellite positioning system working module of the positioning target terminal indicates "not adjusted" but the working status adjustment flag of the wireless network communication working module of the positioning target terminal indicates "adjusted", then the positioning target terminal configures the working period time length of the wireless network communication working module based on the working period time length of the wireless network communication working module in the received specific downlink control message, and further configures the transceiving window length and non-transceiving window length after the wireless network communication working module of the positioning target terminal enters the power saving working status based on the power saving working mechanism defined and described by the wireless network communication protocol standard used in the assisted-global satellite positioning system of the disclosure.

To sum up, the power saving method and system in the assisted-global satellite positioning system provided by the disclosure, can save the power of the positioning target terminal and reduce the bandwidth resource consumption of the wireless network communication system working module when the assisted-global satellite positioning operation is enabled.

What described above are only preferred embodiments of the disclosure and not intended to limit the scope of patent of the disclosure; and all the equivalent structures or equivalent flow changes made by the description and drawings of the disclosure are directly or indirectly applied to other related technical fields and also within the scope of the patent protection of the disclosure.

## Claims

1. A power saving method in an assisted-global satellite positioning system, comprising:
computing the working period time length of a satellite positioning system working module by a positioning service network side according to the moving status of a positioning target terminal; and
by the positioning target terminal, adjusting the working parameter of the satellite positioning system working module according to the working period time length, and controlling the satellite positioning system working module and/or a wireless network communication working module to enter a power saving working status.

2. The method according to claim 1, wherein the process of computing the working period time length by the positioning service network side comprises:
computing the final location information of the positioning target terminal acquired after correction based on the received original location information, creating and/or updating a historical location information list of the positioning target terminal based on the final location information; and
estimating the moving status of the positioning target terminal according to the historical location information list, and computing the working period time length of the satellite positioning system working module by using a preset dynamic adjustment rule based on an estimation result.

3. The method according to claim 2, wherein after acquired the working period time length by computing, the method further comprises:
by the positioning service network side, judging whether the wireless network communication working module needs to adjust its working status according to at least one of the working period time length of the satellite positioning system working module, the current working status and/or parameter configuration of the wireless network communication working module in the positioning target terminal, and the current service born by the wireless network communication working module, and computing the new working period time and each time window parameter of the wireless network communication working module.

4. The method according to claim 3, after entered the power saving working status, the method further comprises:
proactively allocating bandwidth resources related to the next uplink transmission positioning operation to the wireless network communication working module of the positioning target terminal in advance by the positioning service network side according to the working period time length of the satellite positioning system working module.

5. The method according to any one of claims 1 to 4, wherein before the positioning service network side computes the working period time length, the method further comprises:
after the navigation satellite orbit tracking operation is completed by the satellite positioning system working module of the positioning target terminal, transmitting the original location information to the positioning service network side through the wireless network communication working module of the satellite positioning system working module and transmitting a flag for requesting to enter the power saving working status.

6. An assisted-global satellite positioning system, comprising:
a positioning service network side, which is configured to compute the working period time length of a satellite positioning system working module according to the moving status of a positioning target terminal; and
a positioning target terminal, which is configured to adjust the working parameter of the satellite positioning system working module according to the working period time length, and control the satellite positioning system working module and/or a wireless network communication working module to enter a power saving working status.

7. The system according to claim 6, wherein when computing the working period time length, the positioning service network side is configured to:
compute the final location information of the positioning target terminal acquired after correction based on the received original location information, and create and/or update a historical location information list of the positioning target terminal based on the final location information; and
estimate the moving status of the positioning target terminal according to the historical location information list, and compute the working period time length of the satellite positioning system working module by using a preset dynamic adjustment rule based on an estimation result.

8. The system according to claim 7, wherein after the working period time length is acquired by computing, the positioning service network side is further configured to:
judge whether the wireless network communication working module needs to adjust its working status according to at least one of the working period time length of the satellite positioning system working module, the current working status and/or parameter configuration of the wireless network communication working module in the positioning target terminal, and the current service born by the wireless network communication working module, and compute the new working period time and each time window parameter of the wireless network communication working module.

9. The system according to claim 8, wherein after entered the power saving working status, the positioning service network side is further configured to:
proactively allocate bandwidth resources related to the next uplink transmission positioning operation to the wireless network communication working module of the positioning target terminal in advance according to the working period time length of the satellite positioning system working module.

10. The system according to any one of claims 6 to 9, wherein before computes the working period time length, the satellite positioning system working module of the positioning target terminal is further configured to:
transmit the original location information to the positioning service network side through the wireless network communication working module and transmit a flag for requesting to enter the power saving working status after completing navigation satellite orbit tracking operation.
